# EUROPÄISCHE PATENTSCHRIFT

(11) **EP 2 274 571 B1**
(45) Veröffentlichungstag und Bekanntmachung des Hinweises auf die Patenterteilung: **05.06.2013**
(21) Anmeldenummer: 09734711.6
(22) Anmeldetag: 22.04.2009
(51) Int. Cl.: G01B 11/16

(54) **MESSANORDNUNG MIT EINEM FASER-BRAGG-GITTER ZUR ERFASSUNG VON DEHNUNGEN ODER TEMPERATUREN**
MEASURING ARRANGEMENT HAVING A FIBER BRAGG GRATING STRAIN GAUGE FOR DETECTING EXPANSIONS OR TEMPERATURES
DISPOSITIF DE MESURE COMPORTANT UN RÉSEAU DE BRAGG DE FIBRE POUR LA DÉTECTION DE DILATATIONS OU DE TEMPÉRATURES

(30) Priorität: 22.04.2008 DE 102008020247
(43) Veröffentlichungstag der Anmeldung: 19.01.2011
(73) Patentinhaber: EADS Deutschland GmbH, 85521 Ottobrunn (DE)
(72) Erfinder: DEIMEL, Peter, Paul, 85465 Langenpreising (DE)
(74) Vertreter: Schäfer, Matthias W.
(86) Internationale Anmeldenummer: PCT/EP2009/002925
(87) Internationale Veröffentlichungsnummer: WO 2009/130012

(56) Entgegenhaltungen:
- US-A1- 2002 071 626
- US-A1- 2004 114 850
- US-A1- 2007 193 362

## Beschreibung

Die vorliegende Erfindung betrifft eine Messanordnung zur Erfassung von Dehnungen und/oder Temperaturen mit einer Faser, in die auf einem Messabschnitt mindestens ein Faser-Bragg-Gitter eingebracht ist, und mit einem Trägerkörper, auf dem die Faser mit einer Klebemasse aufgebracht ist. Die vorliegende Erfindung behandelt ferner ein Verfahren zur Herstellung einer solchen Messanordnung.

Faser-Bragg-Gitter werden auf einem Messabschnitt einer Lichtleitfaser eingebracht, wobei mehrere Messabschnitte in Folge vorgesehen sein können. Die Faser-Bragg-Gitter sind als Messprinzip zur Erfassung von Dehnungen und/oder Temperaturen von Messobjekten bekannt. Neben Dehnungsmessstreifen, die auf dem Prinzip der Änderung des elektrischen Widerstandes eines Leiters beruhen, wenn dieser gedehnt oder gestaucht wird, können optische Veränderungen in einer Faser beobachtet werden, wenn diese im Bereich des Messabschnittes mit dem Faser-Bragg-Gitter gedehnt oder gestaucht wird.

Zunächst wird die optische Faser im lichtleitenden Kern mit Fremdatomen besetzt. Um den Faserkern erstreckt sich ein Fasermantel, der beispielsweise aus undotiertem Siliziumdioxid (SiO₂) besteht. Die Faser kann eine weitere mechanische Verstärkung aufweisen, die sich um den Fasermantel herum erstreckt und als Coating bezeichnet wird, das aus einem Kunststoff, beispielsweise einem Omocer, bestehen kann. Die Messabschnitte können bei der Herstellung an beliebigen Positionen in der Faser eingebracht werden. Dies geschieht beispielsweise durch energiereiche UV-Belichtung der dotierten Faser mit einem Interferenzmuster (z.B. Krypton-Laser). Durch diese Belichtung entsteht im Faserkern eine periodische Anordnung von zwei Brechzahlen unterschiedlicher Größe. Es entsteht eine Vielzahl von halbdurchlässigen Spiegelflächen im gleichen Abstand innerhalb eines Messabschnittes, die durch den jeweiligen Brechzahlübergang gebildet sind. Von einem breiten Spektrum an Licht wird durch Reflexion die Wellenlänge vielfach fasenrichtig überlagert, die dem Abstand zweier gleicher Brechzahlunterschiede entspricht (sog. Bragg-Gitter). Wird nun die Faser mechanisch gedehnt oder gestaucht, d.h. in Richtung der Lichtausbreitung verformt, so ändert sich der Abstand der Brechzahlunterschiede und eine andere Wellenlänge ist in der Interferenzreflexion zu erkennen. Die Messung basiert folglich auf der Messung der Wellenlängenänderung. Die absolute Wellenlänge der einzelnen Messstellen kann für einen definierten Zustand zuvor kalibriert werden.

Bei der Anwendung von Faser-Bragg-Gittem in Messanordnungen zur Erfassung von Dehnungen und/oder Temperaturen kann es zu Doppelbrechungen in der Faser kommen. Bei extremen Temperaturen von -60°C bis zu +80°C sowie bei hohen Dehnungen Δl/l von >1000 µstrain, können so genannte Doppelbrechungen auftreten.

Bei der Brechung in einem optisch transparenten Medium wie einer Lichtleitfaser kann ein Lichtstrahl in zwei Teilstrahlen aufgeteilt werden. Dieser Effekt wird als Doppelbrechung bezeichnet und bewirkt, dass ein eintreffender Strahl in zwei Teilstrahlen getrennt wird. Ein Teilstrahl, der so genannte ordentliche Strahl, setzt bei senkrechtem Lichteinfall seinen Weg in gerader Linie fort, verhält sich also so wie der Lichtstrahl in einem einfach brechenden Medium. Der andere, so genannte außerordentliche Strahl erfährt auch bei senkrechtem Lichteinfall eine Richtungsänderung. Beide Strahlen weisen unterschiedliche Phasengeschwindigkeiten auf und sind unterschiedlich polarisiert.

Wird die Faser im Bereich des Messabschnittes in Richtung der Längsachse der Faser gedehnt, erfährt diese gleichzeitig in Querrichtung eine Kontraktion, die als Poisson-Effekt bezeichnet wird. Die Kontraktion bewirkt, dass der Faserquerschnitt nicht mehr kreisförmig ist sondern oval wird. Damit ergeben sich für eine optische Mode im Faserkern wie bei einer Ellipse zwei verschiedene optische Hauptachsen. Dies bewirkt ferner, dass sich die Photonen mit ihren elektrischen Feldvektoren entlang der beiden Hauptachsen mit verschiedenen Geschwindigkeiten bewegen und ihre Ausbreitungskonstanten verschiedenen Moden-Wellenlängen entsprechen. Die Frequenz und damit die Energie der Photonen ist für alle Photonen gleich. Nur die Ausbreitungskonstante β resultiert aus der Lösung der Maxwell-Gleichungen mit verschiedenen Randbedingungen. Die Folge davon ist, dass die beiden Moden mit ihren elektrischen Feldvektoren entlang der beiden Hauptachsen mit leicht verschiedenen Wellenlängen an das Faser-Bragg-Gitter ankoppeln und reflektiert werden. Bei einem kreisrunden Faserkern jedoch gibt es nur eine Mode und somit nur eine Modenwellenlänge, die vom Faser-Bragg-Gitter reflektiert wird. Bei Doppelbrechung tauchen zwei Moden auf und es lässt sich keine eindeutige Zuordnung zwischen der Änderung der Bragg-Wellenlänge und der Dehnung der Faser erreichen.

Aus der DE 100 04 384 C2 ist eine Messanordnung zur Erfassung von Dehnungen und/oder Temperaturen mit einer Faser bekannt, die einen Messabschnitt mit einem Faser-Bragg-Gitter besitzt. Die Faser ist über eine Klebemasse mit einem Träger verbunden, wobei die Klebemasse die Faser vollständig umschließt. Die Klebemasse ist als Lack oder als ein lackähnlicher Anstrichstoff ausgebildet und umschließt die Lichtleitfaser wenigstens teilweise und bevorzugt vollständig, so dass diese in der Klebemasse eingebettet und im Ergebnis geschützt ist. Damit wird eine gewöhnliche Anordnung der Faser auf einem Träger beschrieben, die unabhängig von der Art der Auswertung der Dehnung ist, die eine Änderung des optischen Verhaltens der Faser im Bereich des Messabschnittes bewirkt. Bislang bietet der Stand der Technik keine hinreichende Lösung zur Vermeidung von unerwünschten Doppelbrechungen im Bereich des Messabschnittes.

US 2007/0193362 A1 offenbart einen metallischen oder aus Kunststoff hergestellten Halter, in dem eine optische Faser vorgespannt und gehalten wird.

Der Halter wird anschließend auf einem Träger, von dem Dehnungen oder Temperatur erfasst werden sollen, befestigt.

Die US 2002/0071626 A1 offenbart eine Messanordnung zur Erfassung von Dehnungen bestehend aus einem massiven Glas-Halter, in welchem eine vorgespannte optische Faser mit einem Faser-Bragg-Gitter eingebettet ist, wobei der Halter an einem Träger befestigt wird.

Die US 2004/0114850 A1 offenbart eine optische Faser mit einem Faser-Bragg-Gitter, die in einem Rohr vorgespannt ist und an den Enden dieses Rohres befestigt ist.

Es ist daher die Aufgabe der vorliegenden Erfindung, eine Messanordnung zur Erfassung von Dehnungen und/oder Temperaturen mit einer Faser nach dem Faser-Bragg-Gitter -Prinzip anzugeben, bei der das Problem auftretender Doppelbrechungen vermieden wird.

Diese Aufgabe wird ausgehend von einer Messanordnung gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Faser mit der Klebemasse auf den Trägerkörper nur über die an den Messabschnitt angrenzenden Bereiche aufgebracht ist.

Die an den Messabschnitt angrenzenden Bereiche beschreiben die Abschnitte der Faser, die benachbart zum Messabschnitt angeordnet sind. Folglich ist die Klebemasse mit den Bereichen der Faser in Kontakt, die sowohl vor dem Messabschnitt als auch nach dem Messabschnitt angeordnet sind. Das in den Faserkern eingeschriebene Faser-Bragg-Gitter weist in der Regel eine Länge von wenigen Millimetern auf. Wenn die Faser nun erfindungsgemäß außerhalb des Bereiches des Faser-Bragg-Gitters mit dem Trägerkörper verbunden wird, so bleibt der Bereich des Messabschnittes frei von der Klebemasse. Im Ergebnis kann die Einwirkung gerichteter Querkräfte auf die Faser vermieden werden, so dass diese auch unter Belastung einen kreisförmigen Querschnitt beibehält. Damit wird die Entstehung von Doppelbrechungen vermieden, so dass kein negativer Einfluss auf die Zuordnung der gemessenen Wellenlängenverschiebung auf die Dehnung festgestellt werden muss.

Der Trägerkörper der zum optischen Leiter beispielsweise ein Dickenverhältnis von 1:3 aufweisen kann, ist nicht zwangsläufig mit einer Unterbrechung ausgeführt, so dass die Faser auch im Bereich des Messabschnittes über dem Trägerkörper verlaufen kann, auch wenn diese nicht mit einer Klebemasse benetzt ist. Jedoch kann gemäß einer Weiterführung der erfindungsgemäßen Messanordnung vorgesehen sein, dass der Trägerkörper eine Aussparung aufweist, die sich im Bereich des Messabschnittes der Faser befindet. Damit verläuft die Faser über einem freien Abschnitt im Trägerkörper, ohne sowohl mit einer Klebemasse als auch mit der Oberfläche des Trägerkörpers in Kontakt zu stehen. Der Trägerkörper kann dabei beispielsweise eine Dicke von ca. 1 1x10⁻⁶m bis 50x10⁻⁶m aufweisen. Die Messung von Dehnungen oder Temperaturen, die sich auf gleiche Weise in einer Dehnung der Faser äußern, wird durch die erfindungsgemäße Ausgestaltung der Messanordnung nicht negativ beeinflusst.

Gemäß einer weiteren Ausführungsform der erfindungsgemäßen Messanordnung besteht der Trägerkörper aus einer Folie, die eine flache, flächige Erstreckung aufweist. Das Material der Folie kann ein Polyamid sein, das auch mit dem Markenzeichen Kapton der Fa. DuPont bekannt ist. Derartige Folien sind zur Anwendung von Dehnungsmessstreifen nach dem Prinzip des Faser-Bragg-Gitters bekannt, und sind in einem großen Temperaturbereich einsetzbar.

Gemäß einer weiteren möglichen Ausführungsform des erfindungsgemäßen Trägerkörpers weist dieser eine rechteckige Form auf, wobei die Aussparung mittig im rechteckigen Trägerkörper eingebracht ist. Die Aussparung selbst kann ebenfalls eine rechteckige Form aufweisen, wobei die Längsrichtung des gebildeten Rechtecks der Richtung des Faserverlaufs entsprechen kann. Der flächige Trägerkörper kann jedoch auch eine Kreisform mit einer ebenfalls kreisförmigen Aussparung aufweisen. Im Rahmen der vorliegenden Erfindung ist ebenfalls jede weitere geometrische Ausgestaltung sowohl des Trägerkörpers als auch der Aussparung denkbar, wobei die Geometrie insbesondere der spezifischen Messanwendung angepasst sein kann.

Vorteilhafterweise erstreckt sich ein hinreichend großer Abstand zwischen dem Beginn der Kontaktierung der Faser mit der Klebemasse und dem jeweiligen vorderen und hinteren Ende des Messabschnittes. Der Messabschnitt mit dem eingebrachten Faser-Bragg-Gitter weist eine gegebene Länge auf, wobei die freie Länge der Faser zwischen den Bereichen, die mit der Klebemasse auf den Trägerkörper aufgebracht ist, wenigstens die anderthalbfache und bevorzugt die zweifache Länge des Messabschnittes beschreibt. Damit kann sichergestellt werden, dass bei eingebrachter Dehnung oder Stauchung der Querschnitt der Faser im Bereich des Messabschnittes nicht verändert wird. Dieser kann nach dem Poisson-Effekt zwar größer oder kleiner werden, sofern sich eine Querkontraktion im Material der Faser ergibt. Jedoch verlässt der kreisrunde Querschnitt nicht seine Form und es ergeben sich keine Ellipsen oder andere Querschnittsformen.

Die vorliegende Erfindung beschreibt ferner ein Verfahren zur Herstellung einer Messanordnung zur Erfassung von Dehnungen und/oder Temperaturen mit einer Faser, in die auf einem Messabschnitt mindestens ein Faser-Bragg-Gitter eingebracht ist, wobei die Messanordnung einen Trägerkörper umfasst, auf dem die Faser mit einer Klebemasse aufgebracht wird. Gemäß der vorliegenden Erfindung wird die Faser mit der Klebemasse über die an den Messabschnitt angrenzenden Bereiche auf dem Trägerkörper aufgebracht, wobei Mittel angewendet werden, mit denen eine Benetzung der Faser mit der Klebemasse wenigstens im Bereich des Messabschnittes verhindert wird. Die Klebemasse kann in Abhängigkeit ihrer Konsistenz eine Kapillarwirkung aufweisen, die auch eine Benetzung der Faser im Bereich des Messabschnittes bewirkt. Durch die erfindungsgemäßen Mittel kann eine Benetzung der Faser im Bereich des Messabschnittes vermieden werden, so dass diese sich frei über der Aussparung im Trägerkörper erstreckt.

Gemäß der vorliegenden Erfindung können die Mittel eine Folie aufweisen, die vor der Aufbringung der Klebemasse um den Bereich der Faser angeordnet wird, der frei von Klebemasse bleiben soll. Das Material der Folie kann ein Polytetrafluorethylen (PTFE)-Material umfassen, dass auch unter Markenbezeichnung Teflon bekannt ist, wobei die Folie nach dem Aushärten der Klebemasse zwischen der Faser und dem Trägerkörper gemäß eines weiteren Verfahrensschrittes vom Messabschnitt der Faser wieder entfernt wird. Die Folie kann über einen weiteren Bereich als den Messabschnitt der Faser um diese eingebracht werden, so dass der obenstehend beschriebene Abstand der Benetzung des Trägerkörpers zum Beginn des Messabschnittes sichergestellt bleibt.

Die Messanordnung wird auf einem Messobjekt aufgebracht, dessen Dehnungen, Stauchungen oder Temperaturänderungen gemessen werden müssen. Die Aufbringung kann über die Bereiche des Trägerkörpers erfolgen, in denen die Faser über die Klebemasse mit dem Trägerkörper verbunden ist. Diese Bereiche werden insbesondere durch die Außenbereiche des länglich ausgebildeten, rechteckigen Trägerkörpers beschrieben. In den Träger eingebrachte Dehnungen werden auf die Faser übertragen, so dass der eingangs beschriebene Effekt im Faser-Bragg-Gitter hervorgerufen wird. Die Messanordnung kann ferner einen Deckel, eine Haube oder eine sonstige Abdeckung aufweisen, um die Faser vor äußeren Einflüssen zu schützen. Dies ist insbesondere in dem Bereich erforderlich, in dem die Faser einen freien Verlauf zwischen den Klebestellen aufweist. Die Abdeckung kann mit dem Trägerkörper fest verbunden werden, so dass ein Einsatz der erfindungsgemäßen Messanordnung auch unter ungünstigen Umgebungseinflüssen ermöglicht ist.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Fig. 1: die Ansicht eines Ausführungsbeispiels der erfindungsgemäßen Messanordnung mit einem Trägerkörper, in den eine Aussparung eingebracht ist; und
- Fig. 2: einen Schnitt der erfindungsgemäßen Messanordnung entlang der Linie II-II in der Fig. 1.
- Fig. 3: einen Schnitt der erfindungsgemäßen Messanordnung entlang der Linie I-I in der Fig. 1.

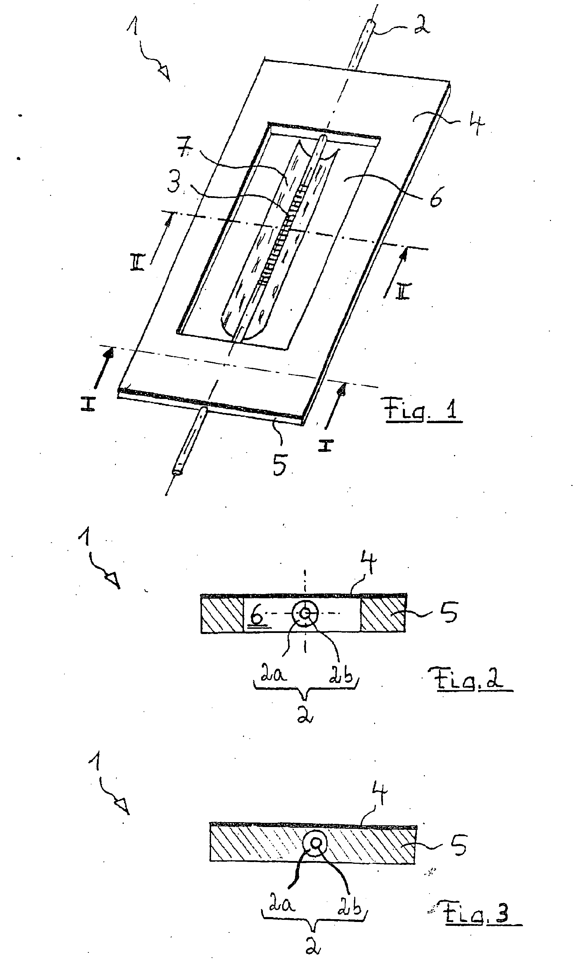

In Fig. 1 ist ein Ausführungsbeispiel einer Messanordnung 1 gezeigt, die zur Erfassung von Dehnungen und/oder Temperaturen ausgebildet ist. Die Messanordnung 1 weist eine Faser 2 auf, die einen Messabschnitt mit einem Faser-Bragg-Gitter 3 umfasst. Der Messabschnitt ist durch Querschnitte in der Faser 2 angedeutet und erstreckt sich über einer definierten Länge I. Die Faser 2 ist auf einem Trägerkörper 4 aufgebracht, wobei eine Klebemasse 5 die Faser 2 auf dem Trägerkörper 4 befestigt und unterseitig am Trägerkörper 4 gezeigt ist. Der Trägerkörper 4 kann auf ein Messobjekt aufgebracht werden, dessen Dehnungen oder Temperaturen gemessen werden sollen. Die Dehnungen werden auf den Trägerkörper 4 auf die Faser 2 übertragen, so dass sich auch der Messabschnitt der Faser 2 mit dem eingebrachten Faser-Bragg-Gitter 3 in der Länge ändert und die Dehnung über sich ändernde optische Verhältnisse in der Faser 2 messen lassen.

Erfindungsgemäß ist der Trägerkörper 4 mit einer Aussparung 6 versehen, durch die der Teil der Faser 2 verläuft, der den Messabschnitt 3 umfasst. Der Trägerkörper 4 weist eine rechteckige Form auf, wobei die Aussparung 6 ebenfalls rechteckigförmig ist und die gleiche Längserstreckung aufweist wie auch der Trägerkörper 4. Der Trägerkörper kann aus einem Polyamid gebildet werden und weist eine flache, flächige Erstreckung auf. Die auf dem Trägerkörper 4 aufgebrachte Klebemasse 5 kann eine größere Dicke umfassen als der Trägerkörper 4, und umschließt die Faser 2 vollständig. Jedoch ist die Klebemasse 5 lediglich auf der Oberfläche des Trägerkörpers 4 aufgebracht, so dass der Messabschnitt der Faser 2 mit dem Faser-Bragg-Gitter 3 nicht mit der Klebemasse 5 in Kontakt steht. Damit können keine gerichteten Querkräfte auf die Faser 2 einwirken und die Faser bleibt unter Belastung kreisrund, so dass eine Doppelbrechung in der Faser vermieden wird. Damit ist eine eindeutige Zuordnung der gemessenen Wellenlängenverschiebung und der Dehnung möglich, wie dies bei der Messung von Dehnungen oder Temperaturen nach dem Prinzip des Faser-Bragg-Gitters erforderlich ist.

Im Bereich des Messabschnittes mit dem Faser-Bragg-Gitter 3 ist eine Folie 7 dargestellt, die vor dem Aufkleben der Faser 2 auf den Trägerkörper 4 um den Messabschnitt mit dem Faser-Bragg-Gitter 3 aufgebracht werden kann. Die Folie verhindert dabei eine Benetzung des Messabschnittes, sodass der gewünschte freie Verlauf der Faser 2 im Bereich des Messabschnittes über dem oder im Trägerkörper 4 sichergestellt werden kann.

Fig. 2 zeigt einen Schnitt entlang der Linie II-II auf Figur 1. Oberseitig ist der Trägerkörper 4 gezeigt, der sich in einen linken und einen rechten Abschnitt aufteilt. Zwischen den beiden Abschnitten erstreckt sich die Aussparung 6, durch die die Faser 2 verläuft. Die Faser ist lediglich an den an den Messabschnitt angrenzenden Bereichen mit der Klebemasse 5 umschlossen, so dass diese nach der Aussparung 6 rückseitig zu sehen ist. Die Faser umfasst einen Fasermantel 2a sowie einen Faserkern 2b, wobei das Faser-Bragg-Gitter 3 in den Faserkern 2b eingebracht ist. In diesem Beispiel beträgt der Durchmesser der Faser 200x10⁻⁶m und die Dicke des Trägerkörper 20x10⁻⁶m. Die in der Figur 1 gezeigte Folie 7 ist in der vorliegenden Figur 2 zur Vereinfachung nicht dargestellt.

Fig. 3 zeigt einen Schnitt entlang der Linie I-I auf Figur 1. Oberseitig ist der Trägerkörper 4 gezeigt. Die Faser ist an den an den Messabschnitt angrenzenden Bereichen mit der Klebemasse 5 umschlossen und umfasst einen Fasermantel 2a sowie einen Faserkern 2b, wobei das Faser-Bragg-Gitter 3 in den Faserkern 2b eingebracht ist. Die in der Figur 1 gezeigte Folie 7 ist in der vorliegenden Figur 2 zur -Vereinfachung nicht dargestellt.

### Bezugszeichenliste

| | |
|---|---|
| **1** | Messanordnung |
| **2** | Faser |
| **2a** | Fasermantel |
| **2b** | Faserkern |
| **3** | Faser-Bragg-Gitter |
| **4** | Trägerkörper |
| **5** | Klebemasse |
| **6** | Aussparung |
| **7** | Folie |
| | |
| **I** | Länge des Messabschnittes |

## Patentansprüche

1. Messanordnung (1) zur Erfassung von Dehnungen und/oder Temperaturen an einem Messobjekt mit einer optischen Faser (2), in die auf einem Messabschnitt mindestens ein Faser-Bragg-Gitter (3) eingebracht ist, mit einem Trägerkörper (4), auf dem die Faser (2) mit einer Klebemasse (5) aufgebracht ist, **dadurch gekennzeichnet, dass** der Trägerkörper (4) eine flache, flächige Erstreckung aufweist und aus einer Folie mit einer durchgehenden Aussparung (6) gebildet ist, wobei die Faser (2) mit der Klebemasse (5) auf den Trägerkörper (4) und die Messanordnung mit der Klebemasse (5) auf das Messobjekt nur über die an den Messabschnitt angrenzenden Bereiche aufgebracht ist, wobei der Messabschnitt der Faser (2) im Bereich der Aussparung (6) ausgebildet ist und der Messabschnitt mit dem eingebrachten Faser-Bragg-Gitter (3) eine Länge (I) aufweist, wobei die freie Länge der Faser (2) zwischen den Bereichen der Faser (2), die mit der Klebemasse (5) auf den Trägerkörper (4) aufgebracht ist, wenigstens die zweifache Länge (I) des Messabschnittes umfasst.

2. Messanordnung (1) nach Anspruch 1, **dadurch gekennzeichnet, dass** das Material des Trägerkörpers(4) ein Polyamid ist.

3. Messanordnung (1) nach einem der Ansprüche 1 bis 2, **dadurch gekennzeichnet, dass** der Trägerkörper (4) und die Aussparung (6) eine rechteckige Form aufweisen, wobei die Aussparung (6) mittig im rechteckigen Trägerkörper (4) eingebracht ist.

4. Messanordnung (1) nach einem der Ansprüche 1 bis 3, **dadurch gekennzeichnet, dass** der Trägerkörper zur optischen Faser (2) ein Dickenverhältnis von 1:3 aufweist.

5. Verfahren zur Herstellung einer Messanordnung (1) zur Erfassung von Dehnungen und/oder Temperaturen nach einem der vorherigen Ansprüche, **dadurch gekennzeichnet, dass** die Faser (2) mit der Klebemasse (5) über die an den Messabschnitt angrenzenden Bereiche auf den Trägerkörper (4) aufgebracht wird, wobei Mittel angewendet werden, mit denen eine Benetzung der Faser (2) mit der Klebemasse (5) wenigstens im Bereich des Messabschnittes verhindert wird, wobei die Mittel eine Folie (7) aufweisen, die vor der Aufbringung der Klebemasse (5) um den Bereich der Faser (2) angeordnet wird, der frei von Klebemasse (5) bleibt und wobei das Material der Folie (7) ein Polytetrafluorethylen (PTFE)-Material ist, wobei die Folie (7) nach dem Aushärten der Klebemasse (5) vom Messabschnitt der Faser (2) wieder entfernt wird.

6. Verfahren nach Anspruch 5, **dadurch gekennzeichnet, dass** die Messanordnung auf einem Messobjekt aufgebracht wird, wobei die Aufbringung über die Bereiche des Trägerkörpers (4) erfolgt, in denen die Faser (2) über die Klebemasse (5) mit dem Trägerkörper (4) verbunden ist.

## Claims

1. Measuring arrangement (1) for detecting strains and/or temperatures on an object to be measured with an optical fibre (2) into which at least one fibre Bragg grating (3) is introduced on a measuring section, with a carrier body (4) on which the fibre (2) is applied by means of an adhesive (5), **characterised in that** the carrier body (4) extends in a flat planar way and is formed from a film with a continuous cutout (6), wherein the fibre (2) is applied by means of the adhesive (5) to the carrier body (4) and the measuring arrangement is applied by means of the adhesive (5) to the object to be measured only over the regions adjoining the measuring section, wherein the measuring section of the fibre (2) is formed in the region of the cutout (6) and the measuring section with the introduced fibre Bragg grating (3) has a length (I), wherein the free length of the fibre (2) between the regions of the fibre (2) which is applied by means of the adhesive (5) onto the carrier body (4) comprises at least twice the length (I) of the measuring section.

2. Measuring arrangement (1) as claimed in Claim 1, **characterised in that** the material of the carrier body (4) is a polyamide.

3. Measuring arrangement (1) as claimed in any one of Claims 1 to 2, **characterised in that** the carrier body (4) and the cutout (6) have a rectangular shape, wherein the cutout (6) is introduced centrally in the rectangular carrier body (4).

4. Measuring arrangement (1) as claimed in any one of Claims 1 to 3, **characterised in that** the ratio of the thickness of the carrier body to that of the optical fibre (2) is 1:3.

5. Process for producing a measuring arrangement (1) for detecting strains and/or temperatures as claimed in any one of the preceding claims, **characterised in that** the fibre (2) is applied by means of the adhesive (5) onto the carrier body (4) via the regions adjoining the measuring section, wherein means are used by which a wetting of the fibre (2) with the adhesive (5) is prevented at least in the region of the measuring section, wherein the means comprise a film (7) which before the application of the adhesive (5) is arranged around the region of the fibre (2) which remains free of adhesive (5), and wherein the material of the film (7) is a polytetrafluoroethylene (PTFE) material, wherein the film (7) is removed again from the measuring section of the fibre (2) after curing of the adhesive (5).

6. Process as claimed in Claim 5, **characterised in that** the measuring arrangement is applied to an object to be measured, wherein the application takes place via the regions of the carrier body (4) to which the fibre (2) is connected to the carrier body (4) by means of the adhesive (5).

## Revendications

1. Dispositif de mesure (1) pour la détermination des contraintes et/ou des températures sur un sujet à mesurer au moyen d'une fibre optique (2) dans laquelle une section de mesure est munie d'au moins un réseau de Bragg fibré (3), avec une structure support (4) sur laquelle la fibre (2) est fixée au moyen d'une petite masse adhésive (5) **caractérisé en ce que** la structure support (4) présente une étendue plate et pleine se composant d'un film avec un renfoncement continu (6), dans lequel la fibre (2) est placée sur la structure support (4) avec la masse adhésive (5) et le dispositif de mesure (1) est placé sur le sujet à mesurer au moyen de la masse adhésive (5) uniquement au niveau des zones adjacentes à la section de mesure, dans lequel la section de mesure de la fibre (2) est formée dans la zone du renfoncement (6) et la section de mesure avec les réseaux de Bragg fibré (3) introduits présente une telle longueur (1) que la longueur libre de la fibre (2) entre les zones de la fibre (2), qui est fixée sur la structure support (4) au moyen de la masse adhésive (5), est équivalente à au moins deux fois la longueur (1) de la section de mesure.

2. Dispositif de mesure (1) selon la Revendication 1 **caractérisé en ce que** le matériau de la structure support (4) est un polyamide.

3. Dispositif de mesure (1) selon l'une des Revendications 1 à 2 **caractérisé en ce que** la structure support (4) et le renfoncement (6) présentent une forme rectangulaire, le renfoncement (6) étant placé au centre de la structure support (4) rectangulaire.

4. Dispositif de mesure (1) selon l'une des Revendications 1 à 3 **caractérisé en ce que** le rapport des épaisseurs entre la structure support et la fibre optique (2) est de 13.

5. Procédé pour la fabrication d'un dispositif de mesure (1) pour la détermination des contraintes et/ou des températures selon l'une quelconque des Revendications précédentes **caractérisé en ce que** la fibre (2) est placée au-dessus des zones adjacentes à la section de mesure sur la structure support (4) au moyen de la masse adhésive (5), des moyens étant mis en oeuvre afin d'empêcher une couverture de la fibre (2) avec la masse adhésive (5) au mmimum dans la zone de la section de mesure, ces moyens comprenant un film (7) disposé avant la mise en place de la masse adhésive (5) autour de la zone de la fibre (2) qui reste exempte de masse adhésive (5), le film (7) se composant d'un matériau polytétrafluoréthylène (PTFE), le film (7) étant retiré de la section de mesure de la fibre (2) après le durcissement de la masse adhésive (5).

6. Procédé selon la Revendication 5 **caractérisé en ce que** le dispositif de mesure est placé sur un sujet à mesurer, la mise en place étant effectuée au-dessus des zones de la structure support (4) dans lesquelles la fibre (2) est reliée à la structure support (4) par la masse adhésive (5).
